# EUROPÄISCHE PATENTANMELDUNG

(11) **EP 0 898 435 A2**
(43) Veröffentlichungstag der Anmeldung: **24.02.1999**
(21) Anmeldenummer: 98110276.7
(22) Anmeldetag: 05.06.1998
(51) Int. Cl.: H04Q 7/26

(54) **Digitales Cordless-Telefonsystem**

(30) Priorität: 16.08.1997 DE 19735473
(71) Anmelder: Deutsche Telekom AG, 53113 Bonn (DE)
(72) Erfinder: Bracharz, Heinrich, Dipl.-Ing., 64407 Fränkisch-Crumbach (DE)

(57) **Zusammenfassung**

Die Erfindung betriff ein digitales Cordless-Telefonsystem, welches mittels einer Auswerteeinheit (2) zu unterscheiden imstande ist, ob ein Abbruch der Verbindung zwischen der Zentraleinheit (1) des Cordless-Telefonsystems und einem Endgerät, bestehend aus einem ortsfesten Fix Part (11,14) und einem mobilen Portible Part (12,21), gewollt durch Abschalten des Portible Part (12,21) oder ungewollt durch Störungen der Funkübertragung zwischen Fix Part (11,14) und Portible Part (12,21) ausgelöst wurde. Bei gewolltem Abbruch wird die Verbindung nach Definition abgebaut. Bei ungewolltem Abbruch wird die Verbindung in einen Haltespeicher (9) gelegt und der Portible Part (12,21) erneut angewählt. Gelingt dies nicht innerhalb eines vorbestimmten Zeitintervalls, leitet die Zentraleinheit die Verbindung an ein Abwurfziel (21,15) weiter, wobei vorzugsweise mehrere Abwurfziele zur Verfügung stehen. Durch das erfindungsgemäße Cordless-Telefonsystem gelingt es vorteilhaft, störungsbedingte Gesprächsabbrüche bei derartigen teilweise netzungebundenen Systemen weitgehend zu vermeiden.

## Beschreibung

Die Erfindung betrifft ein digitales Cordless-Telefonsystem gemäß dem Oberbegriff von Anspruch 1.

Cordless-Telefonsysteme sind Telefonsysteme mit einer Zentraleinheit und meist einer Mehrzahl von Endgeräten, an denen Telefonanrufe ankommen bzw. von denen aus Telefonverbindungen hergestellt werden können. Ein derartiges Endgerät ist in der Regel ein mobiles Funktelefon, der Portible Part, welches über eine Funkstation, den Fix Part, mit der Zentraleinheit verbunden ist. Im Ruhefall befindet sich der Portible Part meist in einer Ladestation, z.B. zur Aufladung der Batterien. Bei einer Telefonverbindung wird vom Fix Part zum Portible Part ein Funkkanal belegt; die Verbindung wird dann vom Fix Part über eine Datenleitung zur Zentraleinheit durchgeschaltet. Zur Herstellung einer Verbindung über die Amtsleitung mit einem externen Telefonanschluß leitet die Zentraleinheit die Verbindung über eine Amtsschnittstelle an eine externe Vermittlungsstelle, einen Netzknoten weiter. Der Verbindungsaufbau zum externen Gerät wird in bekannter Weise vorgenommen. Vom Portible Part kann über die Zentraleinheit auch eine interne Verbindung zu einem weiteren Endgerät geschaltet werden, z.B. wenn das Cordless-Telefonsystem als Haustelefonanlage verwendet wird. Das Endgerät ist entweder ein weiteres Funktelefon, das über einen Fix Part mit freiem Funkkanal und ausreichender Feldstärke mit der Zentraleinheit verbunden ist, oder ein gewöhnliches Telefon. Der umgekehrte Verbindungsaufbau von einem Endgerät zum Portible Part erfolgt entsprechend über die Zentraleinheit und den dem Portible Part zugeordneten Fix Part.

Fix Part und Portible Part fungieren als Sender und Empfänger von Informationen in einem digitalen Übertragungsformat über eine Funkstrecke mit einer Reichweite von etwa 50 bis 300 Metern. Dabei kann es zu Störungen der Datenübermittlung zwischen Fix Part und Portible Part und dadurch zu Bitfehlern im gesamten Übertragungskanal durch bewegliche und statische Einflüsse kommen, welche das vom Sender ausgestrahlte elektromagnetische Wechselfeld beeinflussen können, sowie durch systembedingte Störungen und Beeinflussungen. Weiterhin wird die Datenübermittlung gestört, wenn sich der Endbenutzer dem Rand des Sende- und Empfangsbereichs des Fix Part nähert.

Die Zentraleinheit des Cordless-Telefonsystems überwacht mit einem Bitfehler-Überwachungsmodul die Bitfehler im Übertragungskanal und bricht die Verbindung zum Portible Part bei einer gewissen Bitfehlerzahl ab. Die Verbindung zum Gesprächspartner, d.h. zu einem weiteren externen oder internen Endgerät, wird dann von der Zentraleinheit nach Definition abgebaut, was zu ungewünschten Gesprächsabbrüchen führt. Ebenso baut die Zentraleinheit die Verbindung ab, wenn einer der Teilnehmer auflegt. Dazu weist die Zentraleinheit ein Abschalt-Überwachungsmodul auf.

Nachteilig an bekannten digitalen Cordless-Telefonsystemen ist, daß durch die Unterbrechung der Übertragung aufgrund der Störanfälligkeit des Bereichs zwischen Fix Part und Portible Part häufig unkontrollierbar und ungewollt Gespräche verloren gehen.

Der Erfindung liegt daher die Aufgabe zugrunde, ein Cordless-Telefonsystem zu schaffen, bei welchem ungewollte Gesprächsabbrüche weitestgehend vermieden werden.

Die Aufgabe wird gelöst durch ein Cordless-Telefonsystem gemäß dem Oberbegriff von Anspruch 1, das eine Auswerteeinheit aufweist, welche zu erkennen imstande ist, ob die Verbindung zwischen Zentraleinheit und Portible Part durch Abschalten oder durch Übertragungsfehler unterbrochen wurde, wobei die Zentraleinheit im Fall der fehlerhaften Übertragung die Verbindung zwischen der Zentraleinheit und einem weiteren Endgerät in einem Haltespeicher hält und den erneuten Verbindungsaufbau zum Portible Part nach einem vorbestimmten Zeitintervall automatisch einleitet.

Weitere vorteilhafte Ausgestaltungen der Erfindung sind in den Unteransprüchen gekennzeichnet.

Vorzugsweise wählt die Zentraleinheit bei übertragungsfehlerbedingtem Verbindungsabbruch zum Portible Part ein vorbestimmtes Abwurfziel an, wenn die Wiederherstellung der ursprünglichen Verbindung zum Portible Part innerhalb einer gewissen Zeit nicht gelingt. Dieses Abwurfziel ist beispielsweise ein weiteres Endgerät des Cordless-Systems, das der Benutzer des nicht mehr erreichbaren Portible Part aufsuchen kann, um das Gespräch fortzusetzen. Vorteilhaft ist auch, wenn das Endgerät ein Anrufbeantworter ist, auf dem der andere Gesprächsteilnehmer eine Nachricht hinterlassen kann.

Vorzugsweise ist die Anwahl mehrerer Abwurfziele durch die Zentraleinheit vorgesehen. In dem Fall, daß die Verbindung zum ersten Abwurfziel, z.B. einem Telefonapparat, innerhalb einer gewissen Zeit nicht herstellbar ist, versucht die Zentraleinheit, eine Verbindung zu einem weiteren Abwurfziel, z.B. einem Anrufbeantworter, herzustellen. Erst nach erfolgloser Anwahl sämtlicher vorbestimmter Abwurfziele wird die Verbindung zum wartenden Gesprächspartner des Portible Part-Benutzers definitionsgemäß abgebaut.

Vorzugsweise ist für jeden Portible Part wenigstens ein Abwurfziel individuell einstellbar. Dadurch wird ermöglicht, daß der Benutzer des Portible Part bei ungewolltem Gesprächsabbruch gezielt ein Endgerät in seiner Nähe aufsuchen und das Gespräch dort fortsetzen kann.

Der Gesprächspartner wird vorzugsweise von der Zentraleinheit mittels eines Ansagetextes über den ungewollten Verbindungsabbruch und den Versuch der Wiederherstellung der Verbindung informiert und gebeten, nicht aufzulegen. Bleibt die Wiederherstellung der Verbindung zum Portible Part bzw. die Weitervermittlung an ein Abwurfziel erfolglos, teilt die Zentraleinheit dem Gesprächspartner durch einen Ansagetext mit, daß die Gesamtverbindung nunmehr abgebaut wird.

Durch die Erfindung können digitale Cordless-Systems wesentlich anwendungsfreundlicher gemacht werden, da ungewollte Systemabbrüche, insbesondere aufgrund vorübergehender Übertragunsgstörungen, weitgehend vermieden werden.

Ein Beispiel der Erfindung ist in der Zeichnung dargestellt und im folgenden beschrieben.

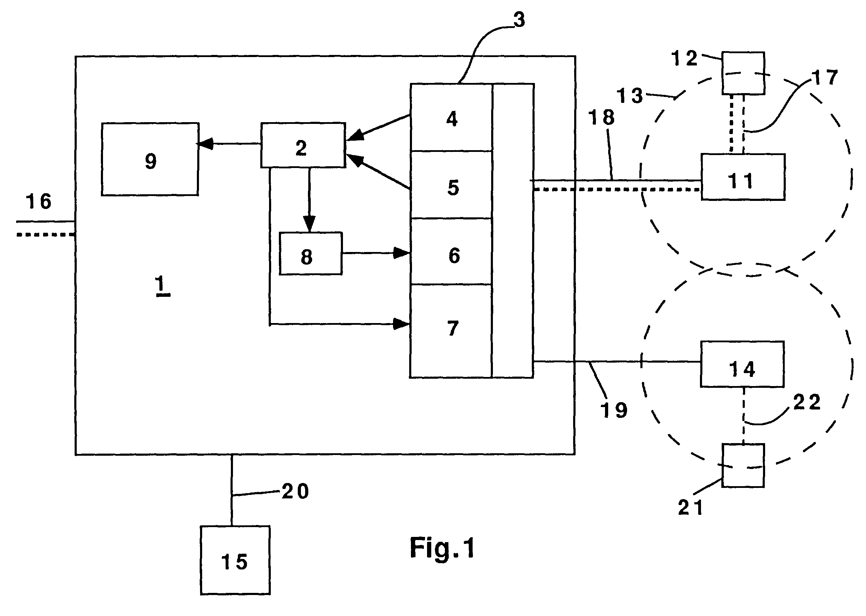

In Figur 1 ist ein Blockschaltbild eines erfindungsgemäßen Cordless-Telefonsystems dargestellt. Es sind nur die erfindungswesentlichen Komponenten gezeigt. Das Telefonsystem besteht aus einer Zentraleinheit 1 mit drei Endgeräten 12, 21 und 15. Die Endgeräte 12 und 21 sind Funktelefone, Portible Parts, denen jeweils eine ortsfeste Funkeinheit, der Fix Part 11 bzw. 14, zugeordnet ist. Das Endgerät 15 ist eine ortsfestes gewöhnliches Telefon oder ein Anrufbeantworter. Der Fix Part 11,14 ist über eine Datenleitung 18 bzw. 19 fest mit der Zentraleineit 1 verbunden. Diese Funkstation kann einen oder mehrere Funkkanäle zur Verfügung stellen und leuchtet einen gewissen Raum aus, der als Kreis um den Fix Part 11 bzw. 14 dargestellt ist. Zwischen dem Fix Part 11 und dem Portible Part 12 können innerhalb dieser Reichweite 13, markiert durch den gestrichelten Kreis, Daten über eine Funkstrecke 17 netzungebunden übertragen werden. Auf diese Weise ist eine teilweise netzungebundene Telefonverbindung zwischen der Zentraleinheit 1 und dem Portible Part 12 über den Fix Part 11 herstellbar. Die Zentraleinheit wiederum kann über eine Amtsschnittstelle 16 Verbindungen über die Amtsleitung oder intern zu weiteren Endgeräten innerhalb des Cordless-Systems eingehen. Entsprechend können zwischen dem Fix part 14 und dem Portible Part 21 Daten über eine Funkstrecke 22 übermittelt werden.

Ein Beispiel für eine Verbindung mit dem Portible Part 12 ist in Figur 1 gepunktet eingezeichnet. Die Verbindung geht von einem externen Anrufer über die Amtsschnittstelle 16 bei der Zentraleinheit 1 ein. Die Verbindungskontroll-Einheit 3 vermittelt die Verbindung innerhalb des Cordless-Systems über die Datenleitung 18 an den Fix Part 11 und überwacht die Verbindung. Der Fix Part stellt die Verbindung mit dem Gesprächspartner am Portible Part 12 über die Funkstrecke 17 her.

Durch statische oder bewegliche Einflüsse innerhalb der Reichweite des Fix Part-Senders wie auch dadurch, daß der Portible Part 12 die Reichweite 13 verläßt, kann die Datenübertragung zwischen Fix Part 11 und Portible Part 12 und damit der gesamte Übertragungskanal zwischen Portible Part 12 und Zentraleinheit 1 gestört werden. Mittels eines Bitfehler-Überwachungsmoduls 4 erkennt die Verbindungskontroll-Einheit 3 eine störungsbedingt erhöhte Bitfehlerrate im Übertragungskanal und löst die Verbindung zwischen Zentraleinheit 1 und Portible Part 12 auf. Ebenso erkennt die Verbindungskontroll-Einheit 3 mittels des Abschalt-Überwachungsmoduls 5 ein gewolltes Unterbechen der Verbindung durch Auflegen seitens des Portible Part-Benutzers.

Die Zentraleinheit 1 des Cordless-Telefonsystems kann in vorteilhafter Weise zwischen vom Benutzer des Portible Part 12 gewollten und störungsbedingtem ungewollten Abbruch der Verbindung zwischen Zentraleinheit 1 und Portible Part 12 unterscheiden. Dazu überwacht die Auswerteeinheit 2 sowohl das Bitfehler-Überwachungsmodul 4 als auch das Abschalt-Überwachungsmodul 5. Hat das Abschalt-Überwachungsmodul 5 ein gewolltes Abschalten der Verbindung von der Zentraleinheit 1 zum Portible Part 12 identifiziert, so gibt die Auswerteeinheit 2 die Verbindung zum externen Endbenutzer zum Abbau nach Definition frei. Hat jedoch das Bitfehler-Überwachungsmodul 4 den Abbruch der Verbindung zwischen Zentraleinheit und Portible Part wegen Übertragungsstörungen ausgelöst, so erkennt dies die Auswerteeinheit 2 und veranlaßt, daß die Verbindung zum externen Endbenutzer in einen Haltespeicher 9 gelegt wird.

Nach einem mit einem Timer 8 einstellbaren Zeitintervall leitet die Zentraleinheit 1 über die Verbindungskontroll-Einheit 3 die Wiederanwahl des Portible Part 12 ein. Dies geschieht mittels eine Wiederanwahl-Einheit 6. Handelte es sich bei der Störung, die zum Abbruch der Verbindung führte, um einen vorübergehenden Einfluß, so kann der Portible Part-Benutzer meist nach diesem Zeitintervall wieder erreicht werden.

Die Verbindungskontroll-Einheit 3 versucht während eines vorbestimmten Zeitintervalls, die Verbindung zum Portible Part wiederherzustellen. Gelingt dies nicht innerhalb dieser Zeit, z.B. weil die Batterie des Portible Part 12 entladen ist oder alle Funkkanäle besetzt sind, so wählt die Verbindungskontroll-Einheit 3 mittels einer Abwurf-Einheit 7 ein weiteres Endgerät als vorbestimmtes Abwurfziel an. Dies ist hier beispielsweise ein weiterer Portible Part 21, ein gewöhnliches Telefon oder ein Anrufbeantworter 15. Die Abwurfziele sind vorzugsweise individuell für den jeweiligen Portible Part einstellbar und werden nacheinander angewählt, bis eine Verbindung hergestellt ist. Dann wird die externe Verbindung aus dem Haltespeicher 9 genommen und automatisch zum nunmehr aktivierten Endgerät 21, 15 durchgeschaltet. Der externe Gesprächspartner kann dann das Gespräch mit dem Benutzer des jeweiligen Abwurfziels 21 bzw. 15 wieder aufnehmen bzw. eine Nachricht hinterlassen.

Die Zentraleinheit 1 veranlaßt weiterhin, daß dem externen Gesprächspartner bei Verbindungsabbruch ein Ansagetext vorgespielt wird, welcher ihn auf den Versuch, die Verbindung wiederherzustellen, hinweist und ihn bittet, nicht aufzulegen. Nach erfolgloser Wieder- oder Weiterverbindung wird dies dem Anrufer ebenfalls über einen Ansagetext mitgeteilt.

## Patentansprüche

1. Digitales Cordless-Telefonsystem, bestehend aus einer Zentraleinheit (1), die über eine Datenleitung (18, 19), insbesondere eine ISDN-Leitung, mit wenigstens einer ortfesten Funkeinheit, dem Fix Part (11, 14), verbunden ist, und wenigstens einem dem Fix Part (11, 14) zugeordneten mobilen Endgerät, dem Portible Part (12, 21), der vom Fix Part zur netzungebundenen digitalen Datenübermittlung über eine Funkstrecke (17, 22) ansteuerbar ist, wobei eine an der Zentraleinheit (1) ankommende Verbindung über die Datenleitung (18, 19) an den Fix Part (11, 14) und gegebenenfalls über die Funkstrecke (17, 22) weiter zum Portible Part (12, 21) weitergeleitet wird und umgekehrt vom Portible Part (12, 21) eine teilweise netzungebundene Verbindung zur Zentraleinheit (1) und von dort zu einem weiteren Endgerät herstellbar ist, und wobei die Zentraleinheit (1) die Verbindung zum Portible Part (12, 21) abbaut, wenn die Übertragung fehlerhaft ist oder wenn die Verbindung seitens des Portible Part (12) durch Abschalten unterbrochen wird, gekennzeichnet durch
eine Auswerteeinheit (2), welche zu erkennen imstande ist, ob die Verbindung zwischen Zentraleinheit (1) und Portible Part (12) durch Abschalten oder durch Übertragungsfehler unterbrochen wurde, wobei die Zentraleinheit (1) im Fall der fehlerhaften Übertragung die Verbindung zwischen der Zentraleinheit und einem weiteren Endgerät in einem Haltespeicher (9) hält und den erneuten Verbindungsaufbau zum Portible Part (12) nach einem vorbestimmten Zeitintervall automatisch einleitet.

2. Digitales Cordless-Telefonsystem nach Anspruch 1, dadurch gekennzeichnet,
daß die Zentraleinheit bei übertragungsfehlerbedingtem Verbindungsabbruch zum Portible Part (12) ein vorbestimmtes Abwurfziel (21, 15), z.B. einen weiteren Portible Part (21), anwählt, wenn die Wiederherstellung der ursprünglichen Verbindung zum Portible Part (12) mißlingt.

3. Digitales Cordless-Telefonsystem nach Anspruch 2, dadurch gekennzeichnet,
daß wenigstens ein weiteres Abwurfziel (21, 15) einstellbar ist, welches angewählt wird, wenn die Wiederherstellung der ursprünglichen Verbindung zum Portible Part (12) und die Verbindungsherstellung zum ersten Abwurfziel mißlingt.

4. Digitales Cordless-Telefonsystem nach Anspruch 2 oder 3, dadurch gekennzeichnet,
daß für jeden Portible Part (12) wenigstens ein Abwurfziel (21, 15) individuell einstellbar ist.

5. Digitales Cordless-Telefonsystem nach einem der Ansprüche 2 bis 4, dadurch gekennzeichnet,
daß die Zentraleinheit (1) nach innerhalb einer vorbestimmten Zeitspanne erfolgloser Weitervermittlung der Verbindung an den Portible Part (12) oder ein Abwurfziel (21, 15) die Verbindung zum Endgerät nach Definition abbaut.

6. Digitales Cordless-Telefonsystem nach einem der vorangegangenen Ansprüche, dadurch gekennzeichnet,
daß die Zentraleinheit (1) nach übertragungsfehlerbedingtem Verbindungsabbruch zum Portible Part (12) eine automatische Ansage in die Verbindung zum Endgerät einspielt, über die dem Gesprächspartner mitgeteilt wird, daß das System die Wiederherstellung der Verbindung versucht.

7. Digitales Cordless-Telefonsystem nach Anspruch 6, dadurch gekennzeichnet,
daß die Zentraleinheit (1) nach erfolgloser Weitervermittlung der Verbindung an den Portible Part (12) oder ein Abwurfziel (21, 15) den Verbindungsabbruch dem Gesprächspartner über eine automatische Ansage mitteilt.

8. Digitales Cordless-Telefonsystem nach einem der vorangegangenen Ansprüche, dadurch gekennzeichnet,
daß das Abwurfziel (21, 15) ein Anrufbeantworter ist.
